# EUROPEAN PATENT APPLICATION

(11) **EP 4 296 236 A1**
(43) Date of publication of application: **27.12.2023**
(21) Application number: 22771688.3
(22) Date of filing: 14.03.2022
(51) Int. Cl.: C01G 51/10

(54) **METHOD FOR PREPARING COBALT SULFATE SALT**

(30) Priority: 16.03.2021 KR 20210034110
(71) Applicant: SK Innovation Co., Ltd., Seoul 03188 (KR)
(72) Inventor: NA, Ji Ye, Daejeon 34124 (KR); KIM, Hyeon Jung, Daejeon 34124 (KR)
(74) Representative: Frick, Robert
(86) International application number: PCT/KR2022/003504
(87) International publication number: WO 2022/197022

(57) **Abstract**

In a method for preparing a cobalt sulfate salt, a feeding solution comprising cobalt sulfate and a sulfuric acid aqueous solution is prepared. A first solution is produced by evaporation-crystallizing the feeding solution. A first cobalt sulfate salt is produced by filtering the first solution together with first purging. A second solution is produced by cooling-crystallizing an aqueous solution comprising the first cobalt sulfate salt. A second cobalt sulfate salt is produced by filtering the second solution together with second purging.

## Description

### [TECHNICAL FIELD]

The present invention relates to a method for preparing a cobalt sulfate salt. More particularly, the present invention relates to a method for preparing a cobalt sulfate salt which includes a purification process.

### [BACKGROUND ART]

A secondary battery which can be charged and discharged repeatedly has been widely developed and employed as a power source of a mobile electronic-communication device such as a camcorder, a mobile phone, a laptop computer, etc., and a power source of a vehicle such as a hybrid vehicle and an electric vehicle. A lithium secondary battery among the secondary batteries is actively developed and applied due to high operational voltage and energy density per unit weight, a high charging rate, a compact dimension, etc.

A lithium metal oxide may be used as a cathode active material for the lithium secondary battery. The lithium metal oxide may contain cobalt, may further contain a transition metal such as nickel, manganese, etc.

As the above-mentioned high-cost valuable metals are used for the cathode active material, 20% or more of a production cost is required for manufacturing the cathode material. Additionally, as environment protection issues have recently been highlighted, a recycling method of the cathode active material is being researched.

For example, cobalt may be recovered in the form of cobalt sulfate by leaching a waste cathode active material in a strong acid, and a cathode active material may be prepared again using the recovered cobalt sulfate.

However, another transition metal such as manganese may be included as impurities in the recovered cobalt sulfate. Therefore, a process design for obtaining a high-purity cobalt compound without excessively reducing a cobalt yield is required.

### DETAILED DESCRIPTIONS OF THE INVENTION

### [Technical Objective]

According to an aspect of the present invention, there is provided a method for preparing a cobalt sulfate salt providing improved purity and yield.

### [Technical Means]

In a method for preparing a cobalt sulfate salt, a feeding solution containing cobalt sulfate and an aqueous solution of sulfuric acid is prepared. A first solution is produced by an evaporation crystallization of the feeding solution. The first solution is filtered together with a first purging to produce a first cobalt sulfate salt. A second solution is produced by a cooling crystallization of an aqueous solution containing the first cobalt sulfate salt. The second solution is filtered together with a second purging to produce a second cobalt sulfate salt.

In some embodiments, a temperature of the evaporation crystallization may be from 60 to 80 °C.

In some embodiments, a temperature of the cooling crystallization is from 10 to 20 °C.

In some embodiments, a ratio of a removed solution by the first purging may be 5 wt% or less based on a weight of the first solution.

In some embodiments, a ratio of a removed solution by the first purging may be from 1 to 5 wt% based on a weight of the first solution.

In some embodiments, a ratio of a removed solution by the second purging may be from 5 to 20 wt% based on a weight of the second solution.

In some embodiments, a ratio of a removed solution by the second purging may be from 5 to 10 wt% based on a weight of the second solution.

In some embodiments, a ratio of a removed solution from a weight of the second solution by the second purging may be greater than or equal to a ratio of a removed solution from a weight of the first solution by the first purging.

In some embodiments, the feeding solution may further include manganese impurities.

In some embodiments, an amount of manganese impurities removed in the cooling crystallization may be greater than an amount of manganese impurities removed in the evaporation crystallization.

In some embodiments, the first cobalt sulfate salt may include cobalt sulfate monohydrate (CoSO₄·H₂O), and the second cobalt sulfate salt may include cobalt sulfate heptahydrate (CoSO₄·7H₂O).

In some embodiments, filtering the first solution together with the first purging or filtering the second solution together with the second purging may include recycling a liquid phase separated by the filtration to the feeding solution.

### [Effects of the Invention]

According to the example embodiments as described above, an evaporation crystallization and a cooling crystallization may be sequentially performed on a feeding solution containing cobalt sulfate to obtain a cobalt sulfate salt with high purity.

In example embodiments, a first purging may be performed between the evaporation crystallization and the cooling crystallization to reduce a concentration of a sulfuric acid in the solution, thereby promoting a crystallization of the cobalt sulfate salt. Additionally, a second purging may be performed after the cooling crystallization to reduce an amount of a liquid phase, so that an amount of manganese remaining in the feeding solution may be reduced.

In example embodiments, yield and purity of the recovered cobalt sulfate salt may both be improved by adjusting a purging amount of each of the first purging and the second purging.

### [Brief Descriptions of the Drawings]

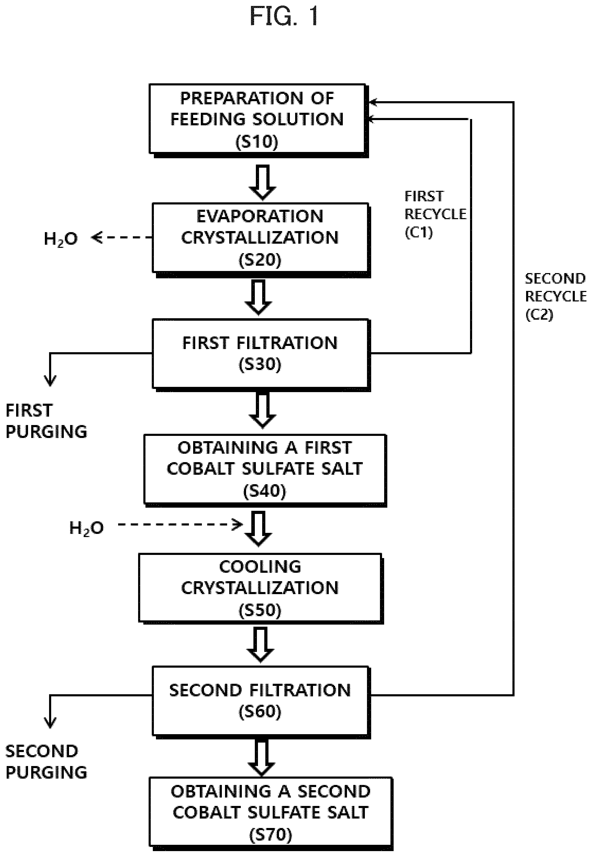

FIG. 1 is a schematic flow diagram for describing a method for preparing a cobalt sulfate salt in accordance with example embodiments.

### [Embodiments for Practicing the Invention]

Embodiments of the present invention provide a high-purity, high-yield method for preparing a cobalt sulfate salt from a cathode active material of a lithium secondary battery.

However, embodiments of the present invention are not limited to a recovery process from the lithium secondary battery, and may be used in various manufacturing and producing processes involving a purification process of a cobalt sulfate salt.

Hereinafter, embodiments of the present invention will be described in detail with reference to the accompanying drawing. However, the embodiments are merely examples and the present invention is not limited to the specific exemplary embodiment.

FIG. 1 is a schematic flow diagram for describing a method for preparing a cobalt sulfate salt in accordance with example embodiments.

Referring to Figure 1, a feeding solution containing cobalt (e.g., in a process of S10) may be prepared.

The feeding solution may include cobalt sulfate (CoSO₄). In some embodiments, cobalt sulfate may be obtained from a cathode active material of a waste lithium secondary battery or a used lithium secondary battery.

For example, a cathode may be separated from the waste lithium secondary battery to recover the waste cathode. The waste cathode may include a cathode current collector (e.g., aluminum (Al)) and a cathode active material layer, and the cathode active material layer may include, e.g., a nickel-cobalt-manganese (NCM)-based lithium transition metal oxide (e.g., Li(NCM)O₂).

An active material solution may be formed by separating the cathode active material layer from the waste cathode to collect an active material mixture, and then treating the active material mixture with sulfuric acid together with a reducing agent such as hydrogen peroxide (H₂O₂).

In some embodiments, a precipitation using an alkali, a filtration, a centrifugation, a washing, etc., may be further performed to reduce components of the current collector, a conductive material and/or a binder remaining in the active material mixture.

A transition metal extractant may be added to the active material solution, so that, e.g., nickel sulfate (NiSO₄), cobalt sulfate (CoSO₄) and manganese sulfate (MnSO₄) may be generated and collected from Ni, Co, and Mn, respectively. For example, the transition metal extractant may include a phosphoric acid-based compound.

In some embodiments, the transition metal extraction may be performed while increasing a pH stepwise. For example, Mn, Co and Ni may be sequentially extracted while increasing the pH.

For example, manganese sulfate (MnSO₄), cobalt sulfate (CoSO₄) and nickel sulfate (NiSO₄) may be sequentially extracted while stepwise increasing the pH of the active material solution.

The feeding solution including cobalt sulfate collected as described above may be prepared. The feeding solution may include cobalt sulfate contained in an aqueous sulfuric acid solution, and unextracted residual manganese sulfate may be included as an impurity. As will be described below, a crystallization process may be performed to obtain high-purity cobalt sulfate.

For example, an evaporation crystallization of the feeding solution may be performed in, e.g., a process of S20.

The evaporative crystallization may include a vacuum evaporation process. For example, the evaporative crystallization may be performed at a temperature ranging from about 60 to 80 °C. As shown in FIG. 1, a first solution having an increased concentration of cobalt sulfate may be prepared while partially removing water (H₂O) through the evaporation crystallization.

Thereafter, a first cobalt sulfate salt may be obtained through a first filtration process of the first solution in, e.g., processes of S30 and S40.

The first filtration process may include, e.g., a solid phase-liquid phase separation (solid/liquid separation) process using a filter press or a centrifugal dehydration process. The liquid phase may be at least partially removed and separated by the first filtration process, so that the solid phase of the first cobalt sulfate salt may be extracted.

In some embodiments, a portion of the liquid phase separated by the first filtration process may be recycled to the feeding solution (e.g., a first recycle C1). Accordingly, cobalt that is not recovered through the evaporation crystallization may be circulated again to increase a cobalt recovery.

In some embodiments, the first cobalt sulfate salt may include cobalt sulfate monohydrate (CoSO₄·H₂O).

In example embodiments, a first purging of the first solution may be performed. In some embodiments, as shown in FIG. 1, the first purging may be performed while performing the first filtration process.

A predetermined fraction of the first solution introduced into the first filtration process may be removed by the first purging. Accordingly, a concentration of sulfuric acid may become lowered during the first filtration process, so that solid/liquid separation efficiency in the first filtration process may be enhanced. Thus, collection efficiency and yield of the first cobalt sulfate salt may be increased.

In FIG. 1, processes S20 and S30 are separately represented as the evaporation crystallization and the first filtration, respectively, but both processes S20 and S30 may be included as the evaporation crystallization.

A cooling crystallization may be further performed on the collected first cobalt sulfate salt in, e.g., a process of S50. For example, an aqueous solution may be formed by adding a distilled water to the first cobalt sulfate salt. A temperature of the distilled water may be from about 60 to 80 °C for a dissolution efficiency. Thereafter, the aqueous solution may be cooled to a temperature of about 10 to 20 °C to obtain a second solution.

Thereafter, a second cobalt sulfate salt may be obtained by a second filtration process for the second solution cooled in, e.g., the processes of S50 and S60.

The second filtration process may include a solid phase-liquid phase separation (solid/liquid separation) process through, e.g., a filter press or a centrifugal dehydration process. The liquid phase of the second solution may be at least partially removed and separated by the second filtration process, so that the solid second cobalt sulfate salt may be extracted.

In some embodiments, the second cobalt sulfate salt may include cobalt sulfate heptahydrate (CoSO₄·7H₂O).

In some embodiments, a portion of the liquid phase separated by the second filtration process may be recycled back to the feeding solution (e.g., a second recycling C2). Accordingly, cobalt that is not recovered by the cooling crystallization may be circulated again to increase the cobalt recovery.

In example embodiments, a second purging of the second solution may be performed. In some embodiments, as shown in FIG. 1, the second purging may be performed while performing the second filtration process.

A predetermined fraction of the second solution introduced into the second filtration process may be removed by the second purging. An amount of manganese that remains and is not separated by the evaporative crystallization may be reduced by the second purging. Accordingly, manganese removal and manganese separation efficiency may be increased by the second filtration. Thus, purity of the second cobalt sulfate salt collected in the process of S70 may be increased.

In FIG. 1, the processes S50 and S60 are separately represented as the cooling crystallization and the second filtration, respectively, but both processes S50 and S60 may be included as the cooling crystallization.

In some embodiments, a purging ratio in the second purging may be greater than or equal to a purging ratio in the first purging.

In an embodiment, a ratio of the solution removed in the first purging (the first purging ratio) may be about 5 wt% or less, preferably from about 1 to 5 wt% based on a weight of the first solution. Within the first purging ratio range, a separation efficiency of the first cobalt sulfate salt may be enhanced without excessive degradation of an overall yield.

In an embodiment, a ratio of the solution removed in the second purging (the second purging ratio) may be from about 5 to 20 wt%, preferably from about 5 to 15 wt%, more preferably from about 5 to 10 wt% based on a weight of the second solution. Within the second purging ratio range, manganese impurities may be sufficiently removed while preventing an excessive reduction of the overall yield of the cobalt sulfate salt.

As described above, in an embodiment, the second purging ratio may be adjusted to be greater than or equal to the first purging ratio or greater than the first purging ratio. Accordingly, a removal efficiency of the manganese impurities in the cooling crystallization may be increased while relatively increasing the crystallization efficiency of the entire sulfate salt in the evaporative crystallization.

For example, the liquid phase separation may be performed from the feeding solution through the evaporative crystallization, and the production efficiency of the solid salt may be improved through the first purging. A relatively large amount of the manganese impurities may be included in the first solution formed after the evaporative crystallization, and the manganese impurities may be removed through the cooling crystallization.

Accordingly, an amount of manganese removed through the cooling crystallization may be greater than an amount of manganese removed through the evaporative crystallization. The cooling crystallization may be combined with the second purging, so that the removal efficiency of manganese impurities may be further improved, and a high-purity cobalt sulfate salt may be obtained.

Hereinafter, specific experimental examples are presented to enhance understanding of the present invention, but these are merely examples of the present invention and do not limit the scope of the appended claims. It is obvious to those skilled in the art that various changes and modifications are possible, and these changes and modifications fall within the scope of the appended claims.

### Example 1

3 kg of CoSO₄ containing 800 ppm of MnSO₄ and 5-6% of H₂SO₄ was used as a feeding solution.

The feeding solution was evaporated under reduced pressure for 8 hours at 70° C and a pressure of 200 to 500 mbar to produce a first solution. The first solution was filtered through a vacuum pump while maintaining a first purging ratio of 5 wt% to obtain cobalt sulfate monohydrate (CoSO₄·H₂O) as a first cobalt sulfate salt.

0.6 kg of di stilled water (70 °C) was added to the obtained first cobalt sulfate salt, and cooled at 15 °C for 2 hours to produce a second solution. The second solution was filtered through a vacuum pump while maintaining a second purging ratio of 5 wt% to obtain cobalt sulfate heptahydrate (CoSO₄·7H₂O) as a second cobalt sulfate salt.

### Examples 2 and 4

Cobalt sulfate heptahydrate (CoSO₄·7H₂O) was obtained by the same process as that in Example 1, except that the second purging ratio was adjusted as shown in Table 1.

### Comparative Example 1

Cobalt sulfate heptahydrate (CoSO₄·7H₂O) was obtained by the same process as that in Example 1, except that the second purging was not performed in the cooling crystallization.

### Comparative Example 2

Cobalt sulfate heptahydrate (CoSO₄·7H₂O) was obtained by the same method as that in Example 1, except that the first purging was not performed in the evaporation crystallization.

For each product obtained in the above-described Examples and Comparative Examples, an amount of recovered cobalt (recovery ratio(%)) relative to that in the feeding solution, a content of manganese, and a purity of the cobalt sulfate salt were measured. The purity was calculated by a weight of cobalt sulfate heptahydrate relative to a total weight of the obtained product, and the weight of cobalt sulfate heptahydrate was measured using an ICP-AES (Inductively Coupled Plasma Atomic Emission Spectroscopy) analysis.

The evaluation results are shown together in Table 1 below.

**[Table 1]**

| | Example 1 | Example 2 | Example 3 | Example 4 | Comparative Example 1 | Comparative Example 2 |
|---|---|---|---|---|---|---|
| first purging ratio (%) | 5 | 5 | 5 | 10 | 5 | - |
| second purging ratio (%) | 5 | 10 | 20 | 5 | - | 5 |
| Co recovery | 94.35 | 91.09 | 85.18 | 92.44 | 97.86 | 96.34 |
| Mn (ppm) | 2984 | 2638 | 2183 | 3032 | 3472 | 7020 |
| purity (%) | 99.18 | 99.27 | 99.40 | 99.17 | 99.05 | 98.07 |

Referring to Table 1, according to Examples, the first purging and the second purging were combined to reduce the amount of manganese impurities and achieve the cobalt recovery ratio of 85% or more.

In Comparative Example 1 or Comparative Example 2 where the first purging or the second purging was omitted, the purity of the cobalt salt decreased as an amount of residual manganese increased or as an amount of sulfuric acid was not sufficiently removed to be concentrated.

## Claims

1. A method for preparing a cobalt sulfate salt, comprising:
preparing a feeding solution containing cobalt sulfate and an aqueous solution of sulfuric acid;
producing a first solution by an evaporation crystallization of the feeding solution;
filtering the first solution together with a first purging to produce a first cobalt sulfate salt;
producing a second solution by a cooling crystallization of an aqueous solution containing the first cobalt sulfate salt; and
filtering the second solution together with a second purging to produce a second cobalt sulfate salt.

2. The method of claim 1, wherein a temperature of the evaporation crystallization is from 60 to 80 °C.

3. The method of claim 1, wherein a temperature of the cooling crystallization is from 10 to 20 °C.

4. The method of claim 1, wherein a ratio of a removed solution by the first purging is 5 wt% or less based on a weight of the first solution.

5. The method of claim 1, wherein a ratio of a removed solution by the first purging is from 1 to 5 wt% based on a weight of the first solution.

6. The method of claim 1, wherein a ratio of a removed solution by the second purging is from 5 to 20 wt% based on a weight of the second solution.

7. The method of claim 1, wherein a ratio of a removed solution by the second purging is from 5 to 10 wt% based on a weight of the second solution.

8. The method of claim 1, wherein a ratio of a removed solution from a weight of the second solution by the second purging is greater than or equal to a ratio of a removed solution from a weight of the first solution by the first purging.

9. The method of claim 1, wherein the feeding solution further comprises manganese impurities.

10. The method of claim 9, wherein an amount of manganese impurities removed in the cooling crystallization is greater than an amount of manganese impurities removed in the evaporation crystallization.

11. The method of claim 1, wherein the first cobalt sulfate salt comprises cobalt sulfate monohydrate (CoSO₄·H₂O), and the second cobalt sulfate salt comprises cobalt sulfate heptahydrate (CoSO₄·7H₂O).

12. The method of claim 1, wherein filtering the first solution together with the first purging or filtering the second solution together with the second purging comprises recycling a liquid phase separated by the filtration to the feeding solution.
